# EUROPEAN PATENT SPECIFICATION

(11) **EP 2 985 553 B1**
(45) Date of publication and mention of the grant of the patent: **26.08.2020**
(21) Application number: 13881885.1
(22) Date of filing: 10.04.2013
(51) Int. Cl.: F25D 29/00, F25D 23/00, H04N 7/18, G06K 9/62, G06F 3/16

(54) **METHOD FOR MANAGING STORAGE PRODUCT IN REFRIGERATOR USING IMAGE RECOGNITION, AND REFRIGERATOR FOR SAME**
VERFAHREN ZUR VERWALTUNG EINES LAGERPRODUKTES IN EINEM KÜHLSCHRANK MITTELS BILDERKENNUNG UND KÜHLSCHRANK DAFÜR
PROCÉDÉ DE GESTION DE PRODUIT DE STOCKAGE DANS UN RÉFRIGÉRATEUR UTILISANT UN SYSTÈME DE RECONNAISSANCE D'IMAGE ET RÉFRIGÉRATEUR ASSOCIÉ

(43) Date of publication of application: 17.02.2016
(73) Proprietor: LG Electronics Inc., Yeongdeungpo-gu Seoul 150-721 (KR)
(72) Inventor: LEE, Jungho, Seoul 137-724 (KR); YOON, Jeongsuk, Seoul 137-724 (KR); BAEK, Seungmin, Seoul 137-724 (KR)
(74) Representative: Vossius & Partner Patentanwälte Rechtsanwälte mbB
(86) International application number: PCT/KR2013/002995
(87) International publication number: WO 2014/168265

(56) References cited:
- JP-A- H0 849 958
- JP-A- 2012 145 327
- JP-A- 2012 193 873
- KR-A- 20070 003 399
- KR-A- 20110 130 901
- KR-A- 20120 117 464
- KR-A- 20120 117 464
- US-A1- 2011 126 555

## Description

### TECHNICAL FIELD

The present disclosure relates to a method of managing storage items in a refrigerator using image recognition and a refrigerator, and more particularly, to a method of managing storage items in a refrigerator using image recognition and a refrigerator that recognize the loading/unloading of storage goods into or from the refrigerator by using an image recognition technology on an image obtained from a camera which is installed in the refrigerator.

### BACKGROUND ART

A refrigerator is a means for storing food at a low temperature to prevent the food from decaying but the breeding activity of bacteria does not completely stop. Thus, when the food is stored in the refrigerator, the preservation period of the food becomes longer in comparison to when the food is not stored in the refrigerator and it is difficult to completely protect the food from decaying.

Since a time when the food is loaded into the refrigerator is typically different for each food when the food is stored in the refrigerator and it is difficult to find the accurate position of many stored foods, there is a limitation in that the storage period of the foods becomes longer or it is difficult to find how many days have elapsed after the storage.

Also, some functions have been introduced which enable a user to write items stored in the refrigerator and their expiry dates by using a keypad/touch pad when the user loads any food in the refrigerator and provide information based on the written data or simply monitor the inside of the refrigerator from the outside.

In JP 2012 145327 A a storage and refrigerator, capable of improving the accuracy in detecting a wireless tag, is disclosed. Each good is equipped with a wireless tag and the whole inside of the metallic housing of the storage is configured to be a wireless tag readable region. In order to detect the wireless tag the storage includes an antenna which radiates electric waves from the plurality of antenna elements into a storage body and wirelessly communicates with the wireless tag. If the tag is not readable a camera shall be used to detect the movement of goods. In that case the movement of the user's hand is detected with a pyroelectric sensor in order to recognize the goods.

US 2011/12655 A1 discloses a refrigerator and a controlling method thereof that allow collective management of foods stored within the refrigerator. The refrigerator includes, inter alia, a radio frequency identification (RFID) reader which reads RFID tags attached to food items. The information can be outputted via an audio output and a display device. The display device can be separated from the refrigerator and includes an audio input. Thus, the user can add information about the food items, via the screen or via audio.

KR 2012 0117464 A discloses a refrigerator having a recognition device that acquires images from the inside of the refrigerator at subsequent points in time. By determining the difference between two images, for example the area of a compartment which is not occupied by food items, information about the food and the filling status of the refrigerator is derived and food management can be performed.

However, it has many weak points in an aspect of user convenience. Also, when a food is loaded/unloaded without an input or correction, a case where the items stored in the refrigerator are different from provided information may frequently occur.

### DISCLOSURE OF THE INVENTION

### TECHNICAL PROBLEM

Embodiments provide a method of managing storage items in a refrigerator using image recognition and a refrigerator that may automatically recognize and register/delete/correct when a user loads/unloads items including various foods into or from the refrigerator, enable the user to register by using voice, a touch pad, a keypad, etc. which item the user may not recognize so that it is possible to provide accurate information and also increase user convenience.

### TECHNICAL SOLUTION

In one embodiment, a refrigerator according to claim 1 is provided.

The refrigerator may further include a voice input unit obtaining voice information capable of being generated upon loading and unloading of goods and voice information generated by a user for management of goods.

The control unit may include a loading/unloading recognition unit detecting the optical flow through vision recognition on the goods loading/unloading video generated by the imaging unit, and recognizing the loading/unloading of goods through the detected optical flow; an object region detection unit detecting an object region from the goods loading/unloading video; a characteristic extraction unit extracting a characteristic point of a corresponding object from the object region detected; and a storage item management unit updating the storage items information in the refrigerator based on recognition information on the loading/unloading of goods, characteristic point information on the extracted characteristic point, and the stored goods information, and managing the updated storage items information.

The loading/unloading recognition unit detects a motion vector for goods from the goods loading/unloading video through the detected optical flow, and recognize the loading/unloading of corresponding goods based on the detected motion vector.

The object region detection unit captures the goods loading/unloading video when the loading/unloading of goods is recognized, and calculate a difference between a captured frame and a pre-stored background image to separately detect a user's arm and a region that an object occupies.

The object region detection unit may accumulate, by using a Gaussian model, each frame of an image obtained by the imaging unit to obtain an average background image to generate the pre-stored background image.

The characteristic extraction unit may extract a characteristic of goods from a region separated from the image captured from the goods loading/unloading video, and perform goods recognition through a search from a local DB stored in the refrigerator or a global DB provided from outside of the refrigerator based on the extracted characteristic of goods.

The storage goods management unit may update the storage items based on recognized goods information divided into a local DB stored in the refrigerator and a global DB provided from outside of the refrigerator and goods information by a user input.

The storage goods management unit receives a user input for goods not recognized through the image recognition, determine corresponding goods information and update the storage items.

The storage goods management unit may search for based on a direction model of a pre-stored image patch to which category a characteristic of a goods image belongs, and store a category of a characteristic that corresponding goods have and a geometric position relationship.

In another embodiment, a method according to claim 10 is provided.

The method may further include accumulating and storing the generated video; and performing background modeling of a video based on the accumulated and stored video.

The performing of the background modeling of the video may include determining a background region excluding storage goods in the refrigerator and hands from the stored video.

The background modeling may determine the background region through comparison between image frames based on video information accumulated in the data storage unit.

The updating the pre-stored storage items information includes recognizing the loading/unloading of goods through vision recognition from the goods loading/unloading video to generate recognition information; separating an object region from the goods loading/unloading video based on the generated recognition information; extracting a characteristic point of corresponding goods from the separated object region based on the stored goods information; and updating the pre-stored storage items information in the refrigerator based on the recognition information on the loading/unloading of goods, characteristic point information on the extracted characteristic point, and the stored goods information, and managing the updated information.

The generating of the recognition information includes detecting an optical flow through vision recognition on the video generated by the imaging unit; detecting a motion vector for goods from the video through the detected optical flow; and recognizing loading/unloading of corresponding goods based on the detected motion vector.

The extracting of the characteristic point of the goods may include extracting a pre-stored characteristic of goods from an object when searching for goods, extracting a group of candidates according to how much the extracted characteristic has a characteristic of a similar category, and then determines a result of recognition by using a geometric position relationship of each characteristic.

The method according may further include providing information on the storage items and numbers stored in the refrigerator, and notification information to a device outside the refrigerator, a portable device, or e-mail to allow a user to check corruption of goods stored for a certain period.

The method may further include displaying user's usage statistics for each storage item and position information on goods in the refrigerator, for a user.

The method may further include providing inventory information on goods in the refrigerator to an external device that enables users to do shopping.

### ADVANTAGEOUS EFFECTS

According to the present disclosure, it is possible to recognize the loading/unloading of storage items through video recording and vision recognition on storage items including various foods loaded into/unloaded from a refrigerator.

Thus, there is no need for an additional job to be performed by a user for managing the loading/unloading of storage items in the refrigerator. That is, since a typical inconvenient procedure in which a user should bring or register goods into contact with a barcode reader one by one is omitted, user convenience may increase.

Also, since determination on whether any storage item has been loaded into or unloaded from the refrigerator is automatically made through vision recognition, not by user's registration, the storage goods in the refrigerator may be accurately managed.

According to the present disclosure, it is possible to check information on various storage items including foods managed by the refrigerator and it is possible to efficiently manage foods according to the checked information.

Also, according to the present disclosure, it is possible to manage various storage items including foods by using a local DB. Since significantly many kinds of foods may be stored in the refrigerator but the number of foods that may be actually stored in one refrigerator is about 100, the usage of the local DB may enhance the speed and accuracy of food recognition when loading/unloading is performed.

### BRIEF DESCRIPTION OF THE DRAWINGS

Fig. 1 is a block diagram of a refrigerator that performs a method of managing the storage items of the refrigerator using image recognition according to an embodiment.
Fig. 2 is a block diagram for explaining the control unit of a refrigerator according to an embodiment.
Fig. 3 is a flowchart of a method of managing goods in a refrigerator using image recognition according to an embodiment.
Fig. 4 is a flowchart of a method of managing goods in a refrigerator using image recognition according to an embodiment.
Fig. 5 is a flowchart of a method of managing goods in a refrigerator using image recognition according to an embodiment.

### MODE FOR CARRYING OUT THE INVENTION

In the following, embodiments are described in detail with reference to the accompanying drawings. The following embodiments are provided as examples for fully conveying the spirit of the present disclosure to a person skilled in the art. Thus, the present disclosure may not be limited to the following embodiments and may also be implemented in other forms. In addition, the width, length, and thickness of components in the drawings may be exaggerated for convenience. The same reference numerals represent the same components throughout the disclosure. Since the suffixes "module" and "unit" for components used in the following description are given and interchanged for easiness in making the present disclosure, they do not have distinct meanings or functions.

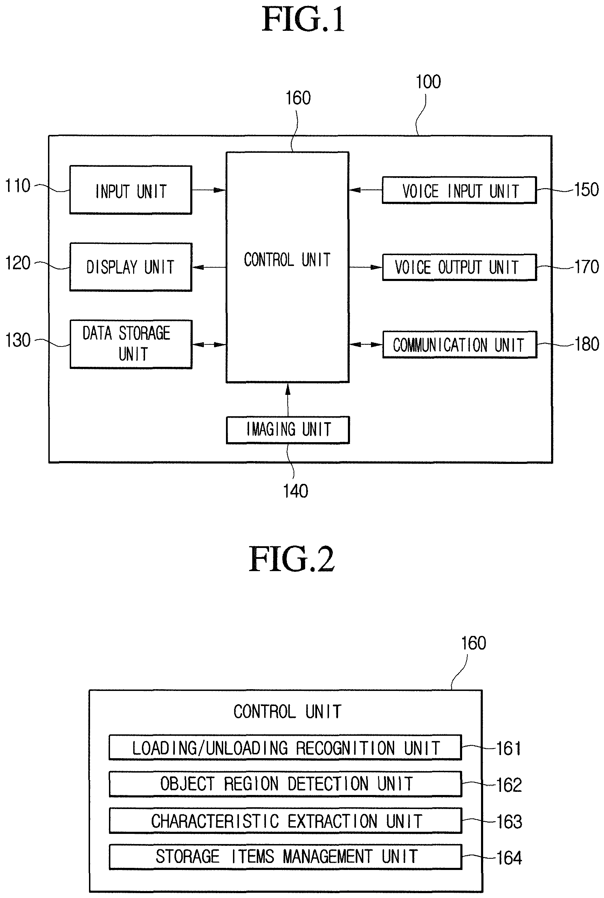

FIG. 1 is a block diagram of a refrigerator that performs a method of managing storage items in the refrigerator using image recognition according to an embodiment.

Referring to Fig. 1, a refrigerator 100 according to an embodiment may include an input unit 110, a display unit 120, a data storage unit 130, an imaging unit 140, a voice input unit 150, a control unit 160, a voice output unit 170, and a communication unit 180.

The input unit 110 is an input device for receiving a user's command for the management of storage items in a refrigerator. For example, the input unit 130 may include a touch panel or keypad.

The display unit 120 may display information on the storage items. The display unit 120 may display information on various goods stored in the refrigerator or goods management information. The display unit 120 may display, for a user, details recognized on goods/ check and inquiry for recognition check/ details input by a user/ retaining goods information/ DB details.

The data storage unit 130 may store goods information. The goods information may include information on goods themselves (goods information) and information on the management of goods (goods management information).

The goods information may include e.g., a type of goods, the name of goods, the shape of goods or the weight of goods, and the goods management information may include e.g., the storage position, an amount of storage, a storage period, or a loading/unloading history of goods.

The data storage unit 130 may include a global DB and a local DB. The global DB may store images of industrial products and fruits/vegetables in the market and data on the images characteristics.

The local DB may store an image obtained by imaging goods in the refrigerator and data including the characteristic of a corresponding image or an image obtained by imaging the inside of the refrigerator and a list of goods. Also, even when there is data on corresponding goods in the global DB, the local BD may also store it.

The imaging unit 140 may obtain images of goods through video recording of goods loaded into/unloaded from the refrigerator 100. The imaging unit 140 may include one or more cameras inside or outside the refrigerator in order to obtain a still image as well as video.

Regions imaged by the imaging unit 140 may include the fresh compartment (for fruits/vegetables), ordinary compartment, door compartment, and freezing compartment inside the refrigerator and the outside of the refrigerator. The images obtained by the imaging unit 140 may be used for recognizing loading into or unloading from the refrigerator of any goods.

The voice input unit 150 may obtain voice information capable of being provided upon the loading/unloading of goods and voice information generated by a user for the management of goods.

The voice input unit 150 may obtain a voice command input from the user in order to set information on goods upon the loading/unloading of goods. For example, the voice input unit 150 may include a directional microphone installed in the refrigerator.

User's voice information obtained through the voice input unit 150 may be used for the check and correction of a user for the goods recognized by the imaging unit 140.

Also, the user's voice information obtained by the voice input unit 150 may be used for inputting information on goods that are not included in the global DB and the local DB.

The control unit 160 may extract a goods region from the image obtained by the imaging unit 110 and extract the characteristic of goods from the extracted goods region.

The control unit 160 compares the extracted image with goods information in the data storage unit 130 to perform recognition on the goods.

Also, the control unit 160 may compare the images of the refrigerator obtained before and after the door of the refrigerator opens, search for a region having a change from the images of the refrigerator and sense the loading/unloading or position change of goods. Also, the control unit 160 may recognize a user voice command input to the voice input unit 120 to convert the recognized command into characters.

The communication unit 180 may transmit data required when the user searches for data by using an external device or when notification information on the items of goods which has been stored in the refrigerator 100 for a certain period and requires a check on whether the goods have been corrupted is transmitted to an external device.

A method of managing goods using image recognition on a refrigerator in the refrigerator having such a configuration is as follows.

When the door of the refrigerator opens, the imaging unit 140 starts video recording. The imaging unit 140 continuously accumulates video to make a background. The video may be later used for separating an object region.

The control unit 160 may use an optical flow from the video obtained by the imaging unit 120 to continuously scan the direction of a moving pixel.

The control unit 160 may recognize through a result of scan that a user's arm enters and then leaves the refrigerator.

When a loading/unloading event occurs, the control unit 160 uses the video of a corresponding scene and the previously made background model to separate a user's arm region from goods. The control unit 160 may extract a characteristic from the separated region to store the extracted characteristic in the local DB or search for the characteristic from the local DB or the global DB.

The name of goods loaded into or unloaded from the refrigerator may be designated by using voice recognition on voice obtained by the voice input unit 150 or a user input that is input by the input unit 110.

The control unit 160 detects a motion vector from the video to recognize the loading or unloading of goods. The control unit 160 may detect the motion vector through the optical flow when there is a motion of goods in the video.

The control unit 160 uses the fact that the directions of dominant motion vectors are opposite when the user's arm enters or leaves the refrigerator in order to load or unload goods into or from the refrigerator 100.

To this end, the control unit 160 may simulate the direction of the motion vector and an amount of the motion vector relative to the entire screen and set a critical value based on a result of the simulation. The control unit 160 may find out based on the set critical value whether goods are loaded/unloaded.

The control unit 160 may separate and detect an object region from an image.

The separation of the object region is a technology using what a portion where there is a little motion may be identified as a background when each frame of the video is continuously accumulated.

That is, the control unit 160 may accumulate, by using a Gaussian model, each frame of an image obtained by the imaging unit 140 to obtain an average background image.

Then, the control unit 160 may calculate a difference between a frame captured when the loading/unloading of goods is recognized and an obtained background image, to approximately find regions that the user's arm and goods occupy.

Also, since the control unit 160 may approximately find the position of an arm by using an edge image, it is possible to separate a goods region.

The control unit 160 may extract the characteristic of goods from the separated goods region.

Since goods loaded into/unloaded from the refrigerator 100 vary, the control unit 160 should use the strong characteristic of goods for goods recognition.

For example, a corner point, SIFT, SURE, MSER, etc. may be used as a reference point extraction method resistant to the variation of goods. These reference point extraction methods are methods modified from detecting a point that the Laplacian of Gaussian is invariable.

When a corresponding point is detected for image recognition, the control unit 160 should store the descriptor of a surrounding region, in which case it is possible to use an image patch, an edge histogram, a color, a texture pattern, an extremal region shape, etc.

In this case, the control unit 160 may use the direction model of the image patch as the characteristic and it is possible to train most characteristics that may be in a daily life, by using a K-D tree structure.

Also, by such a train process, the control unit 160 may quickly search for to which category the characteristic of a goods image belongs, and store the category of a characteristic that corresponding goods have and a geometric position relationship to form a DB.

The control unit 160 may extract the characteristic of goods stored in the data storage unit 130 from an object when searching for goods, extract a group of candidates from the DB according to how much the extracted characteristic has the characteristic of a similar category, and then determine a result of recognition by using the geometric position relationship of each characteristic.

In this case, a goods management function in the refrigerator 100 may be implemented to be a stand alone or server based function.

The stand alone function refers to independently implementing, by the refrigerator, the processes of recognizing loading and unloading, separating a goods region, extracting and recognizing complicated characteristics from the goods image from which a region has been removed, in a state which the input unit 110, the display unit 120, the data storage unit 130, the imaging unit 140, the voice input unit 150, the control unit 160, the voice output unit 170, and the communication unit 180 are all implemented in the refrigerator.

The server based function refers to implementing, by the refrigerator, the processes of recognizing loading and unloading and separating a goods region and implementing, by a server, the processes of extracting and recognizing complicated characteristics from the separated goods image in a state which the input unit 110, the display unit 120, the data storage unit 130, the imaging unit 140, the voice input unit 150, the control unit 160, the voice output unit 170, and the communication unit 180 are all implemented in the refrigerator.

Fig. 2 is a block diagram for explaining the control unit of a refrigerator according to an embodiment.

Referring to Fig. 2, the control unit 160 of the refrigerator according to an embodiment may include a loading/unloading recognition unit 161, an object region detection unit 162, a characteristic extraction unit 163, and a storage item management unit 164.

The loading/unloading recognition unit 161 may detect an optical flow through vision recognition on a video generated by the imaging unit 140. The loading/unloading recognition unit 161 recognizes the loading/unloading of goods through the detected optical flow.

The loading/unloading recognition unit 161 may detect a motion vector for goods from a video through the detected optical flow. The loading/unloading recognition unit 161 may recognize the loading/unloading of corresponding goods based on the detected motion vector.

The object region detection unit 162 detects an object region from a goods loading/unloading video.

The object region detection unit 162 may capture a loading/unloading video when the loading/unloading of goods is recognized. The object region detection unit 162 may calculate a difference between a captured frame and a pre-stored background image to separately detect a user's arm and a region that an object occupies.

The object region detection unit 162 may accumulate, by using a Gaussian model, each frame of an image obtained by the imaging unit 140 to obtain an average background image to generate a pre-stored background image.

The characteristic extraction unit 163 extracts, from the object region detected by the object region detection unit 162, the characteristic point of a corresponding object.

The characteristic extraction unit 163 may extract the characteristic of goods from a region separated from the image captured from the loading/unloading video.

The characteristic extraction unit 163 may perform goods recognition through a search from the local DB stored in the refrigerator or the global DB provided from the outside of the refrigerator based on the extracted characteristic of goods.

The storage item management unit 164 updates storage items information on the refrigerator based on recognition information on the loading/unloading of goods, characteristic point information on the extracted characteristic point, and stored goods information and manages the updated information.

The storage goods management unit 164 may update storage items based on recognized goods information divided into the local DB stored in the refrigerator and the global DB provided from the outside of the refrigerator and goods information by a user input.

The storage goods management unit 164 may receive a user input for goods not recognized through image recognition, determine corresponding goods information and update storage items.

The storage goods management unit 164 may search for, based on the direction model of a pre-stored image patch, to which category the characteristic of a goods image belongs. The storage goods management unit 164 may store the category of a characteristic that corresponding goods have and a geometric position relationship.

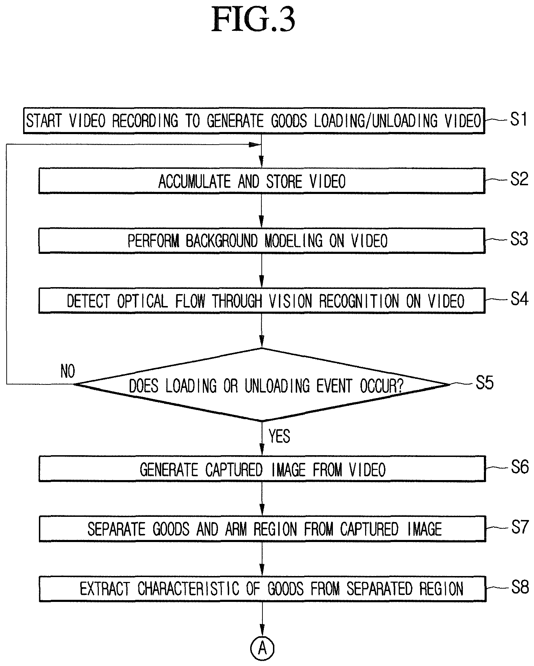

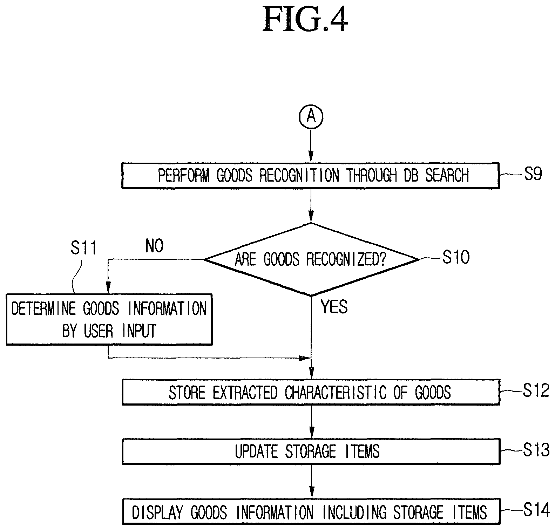

Figs. 3 and 4 are flowcharts of a method of managing goods in a refrigerator using image recognition according to an embodiment.

Referring to Figs. 3 and 4, the imaging unit 140 starts video recording to generate a goods loading/unloading video when it is sensed that the door of the refrigerator 100 opens, in step S1.

The control unit 160 accumulates and stores the video generated by the imaging unit 140 in the data storage unit 130, in step S2.

The control unit 160 performs the background modeling of a video based on the video accumulated and stored in the data storage unit 130, in step S3. The background modeling is a process of determining a background region excluding goods in the refrigerator 100 and hands from the video stored in the data storage unit 130. The background modeling determines the background region through comparison between image frames based on accumulated video information.

The control unit 160 detects an optical flow through vision recognition on the video generated by the imaging unit 140, in step S4. The detection of the optical flow by the control unit 160 may be performed through a continuous scan for the direction of a pixel that moves in the video. The control unit 160 may recognize through a result of a video scan that a user's arm enters and then leaves the refrigerator for the loading and unloading of goods.

The control unit 160 detects a motion vector from the video to recognize the loading or unloading of goods. The control unit 160 may detect the motion vector through the optical flow when there is a motion of goods in the video.

The control unit 160 uses the fact that the directions of dominant motion vectors are opposite when the user's arm enters or leaves the refrigerator in order to load or unload goods into or from the refrigerator 100.

To this end, the control unit 160 may simulate the direction of the motion vector and an amount of the motion vector relative to the entire screen and set a critical value based on a result of the simulation. The control unit 160 may find out based on a set critical value whether goods are loaded/ unloaded.

The control unit 160 determines based on a result of the optical flow detection whether a goods loading or unloading event for the refrigerator has occurred, in step S5.

When it is determined that the loading or unloading event has occurred, the control unit 160 captures a video at a corresponding time to generate captured images and store the generated images in the data storage unit 130, in step S6.

The control unit 160 separates goods and user's arm regions from the captured images generated by the occurrence of the loading or unloading event, in step S7. Separating an object region from an image may be performed by using background information pre-stored in the data storage unit 130, like when separating the goods and user's arm regions from the captured image.

The separation of the object region is a technology using what a portion where there is a little motion may be identified as a background when each frame of the video is continuously accumulated.

That is, the control unit 160 may accumulate, by using a Gaussian model, each frame of an image obtained by the imaging unit 140 to obtain an average background image.

Then, the control unit 160 may calculate a difference between a frame captured when the loading/unloading of goods is recognized and an obtained background image, to approximately find regions that the user's arm and goods occupy.

Also, since the control unit 160 may approximately find the position of an arm by using an edge image, it is possible to separate a goods region.

The control unit 160 may extract the characteristic of goods from the separated goods region.

Since goods loaded into/unloaded from the refrigerator 100 vary, the control unit 160 should use the strong characteristic of goods for goods recognition.

For example, a corner point, SIFT, SURE, MSER, etc. may be used as a reference point extraction method resistant to the variation of goods. These reference point extraction methods are methods modified from detecting a point that the Laplacian of Gaussian is invariable.

When a corresponding point is detected for image recognition, the control unit 160 should store the descriptor of a surrounding region, in which case it is possible to use an image patch, an edge histogram, a color, a texture pattern, an extremal region shape, etc.

In this case, the control unit 160 may use the direction model of the image patch as the characteristic and it is possible to train most characteristics that may be in a daily life, by using a K-D tree structure.

Also, by such a train process, the control unit 160 may quickly detect to which category the characteristic of a goods image belongs, and store the category of a characteristic that corresponding goods have and a geometric position relationship to form a DB.

The control unit 160 extracts the characteristic of goods from a region separated from the captured image in step S8.

The control unit 160 performs goods recognition through a search from the local DB or the global DB based on the extracted characteristic of goods in step S9.

The goods recognition is performed by searching for whether there is goods information that has a characteristic matching the characteristic of goods extracted from the local DB or the global DB. In this case, the match means coincidence within a set range.

The control unit 160 may extract the characteristic of goods stored in the data storage unit 130 from an object when searching for goods, extract a group of candidates from the DB according to how much the extracted characteristic has the characteristic of a similar category, and then determine a result of recognition by using the geometric position relationship of each characteristic.

The control unit 160 determines whether goods recognition is successful, according to whether there is goods information matching the extracted characteristic of goods in the local DB or the global DB, in step S10.

When there is goods information matching the extracted characteristic of goods in the local DB or the global DB, the control unit 160 determines that goods recognition is successful, and when negative, the control unit determines that goods recognition has failed.

The control unit 160 receives a user input for goods not recognized and determines corresponding goods information, in step S11. For example, the name of goods loaded into or unloaded from the refrigerator may be designated by using voice recognition on voice obtained by the voice input unit 150 or a user input that is input by the input unit 110.

The control unit 160 stores the extracted characteristic of goods for recognized goods or goods designated by the user input in the data storage unit 160, in step S12.

The control unit 160 updates storage items based on recognized goods information divided into the local DB and the global DB and the goods information by the user input, in step S13.

The control unit 160 displays goods information including the updated storage items on the display unit 120, in step S14.

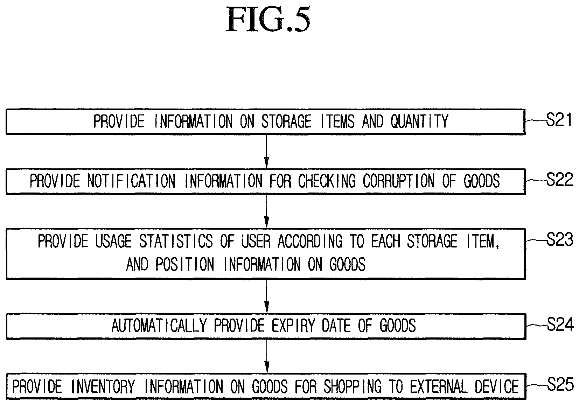

Fig. 5 is a flowchart of a method of managing goods in a refrigerator using image recognition according to an embodiment.

Referring to FIG. 5, the control unit 160 may provide information on storage items and numbers currently stored in the refrigerator after the storage items in the refrigerator have been updated by using refrigerator image recognition, in step S21.

The control unit 160 may automatically provide notification information to a device outside the refrigerator, a portable device, or e-mail so that a user may check the corruption of goods stored for a certain period, in step S22.

Also, the control unit 160 may also provide user's usage statistics for each storage item or provide position information on goods in the refrigerator on the display unit 120, in step S23.

In addition, the control unit 160 may automatically provide the expiry date of goods easy to be corrupted, such as fruits or vegetables, in step S24.

Also, the control unit 160 may provide inventory information on goods in the refrigerator to an external device, such as a smart phone to be used when users do the shopping, in step S25.

Although particular embodiments have been described above, many various may also be implemented without departing from the scope of the present disclosure. Therefore, the scope of the present disclosure should not be limited to the above-described embodiments but should be defined by the following claims.

## Claims

1. A refrigerator (100) comprising:
an imaging unit (140) generating a goods loading/unloading video through video recording of storage goods loaded into or unloaded from the refrigerator (100) when a door of the refrigerator opens;
a data storage unit (130) storing the goods loading/unloading video, goods information that may be stored in the refrigerator (100), and storage items information;
a control unit (160) obtaining and storing a background image from the goods loading/unloading video, recognizing loading/unloading of goods based on an optical flow detected through vision recognition from the goods loading/unloading video, recognizing the goods in the goods loading/unloading video based on the goods loading/unloading video and the background image in order to separate goods and a user's arm regions when the loading/unloading of goods is recognized, and updating the storage items information in the refrigerator (100) based on recognition result of the goods and the goods information stored in the data storage unit (130); and
a display unit (120) displaying a managed state of storage items for a user based on the updated storage items information,
wherein the control unit (160) recognizes the loading/unloading of goods based on directions of motion vectors detected through the optical flow, which are opposite when the user's arm enters and then leaves the refrigerator, and
wherein, when the recognition result of the goods is negative, the control unit (160) receives a user input for the goods from an input unit including at least one of a voice input unit, a touch panel, or keypad.

2. The refrigerator according to claim 1, wherein the voice input unit (150) obtaining voice information capable of being generated upon loading and unloading of goods and voice information generated by a user for management of goods.

3. The refrigerator according to claim 1, wherein the control unit (160) comprises:
a loading/unloading recognition unit (161) detecting the optical flow through vision recognition on the goods loading/unloading video generated by the imaging unit (140), and recognizing the loading/unloading of goods through the detected optical flow;
an object region detection unit (162) detecting an object region from the goods loading/unloading video;
a characteristic extraction unit (163) extracting a characteristic point of a corresponding object from the object region detected; and
a storage item management unit (164) updating the storage items information on the refrigerator (100) based on recognition information on the loading/unloading of goods, characteristic point information on the extracted characteristic point, and the stored goods information, and managing the updated storage items information.

4. The refrigerator according to claim 3, wherein the loading/unloading recognition unit (161) detects the optical flow through scans for direction of a pixel which moves in the goods loading/unloading video.

5. The refrigerator according to claim 1, wherein the control unit (160) simulates direction of the motion vector and an amount of the motion vector relative to an entire screen, sets a critical value based on a result of the simulation, and recognizes the loading/unloading of the goods based on the set critical value.

6. The refrigerator according to claim 3, wherein the object region detection unit (162) captures the goods loading/unloading video when the loading/unloading of goods is recognized, and calculates a difference between a captured frame and the stored background image to separately detect the user's arm and a region that an object occupies.

7. The refrigerator according to claim 6, wherein the object region detection unit (162) accumulates, by using a Gaussian model, each frame of an image obtained by the imaging unit (140) to obtain an average background image to generate the background image.

8. The refrigerator according to claim 6, wherein the object region detection unit (162) detects a region that the user's arm and the object occupies, finds a position of the user's arm by using an edge image, and separates the region that the object occupies based on the position of the user's arm.

9. The refrigerator according to claim 3, wherein the characteristic extraction unit (163) extracts a characteristic of goods from a region separated from the image captured from the goods loading/unloading video, and performs goods recognition through a search from a local DB stored in the refrigerator (100) or a global DB provided from outside of the refrigerator based on the extracted characteristic of goods.

10. A method of managing storage items in a refrigerator (100) using image recognition, the method comprising:
generating a goods loading/unloading video through video recording of storage goods loaded into or unloaded from the refrigerator (100) when a door of the refrigerator opens;
obtaining and storing a background image from the goods loading/unloading video,
recognizing loading/unloading of goods through vision recognition from the goods loading/unloading video based on detected motion vectors from the goods loading/unloading video, which are opposite when a user's arm enters and then leaves the refrigerator;
recognizing the goods in the goods loading/unloading video based on the goods loading/unloading video and the background image in order to separate goods and a user's arm regions when the loading/unloading of goods is recognized;
updating pre-stored storage items information in the refrigerator (100) based on recognition result of goods and pre-stored goods information; and
displaying a managed state of storage items for the user based on the updated storage items information,
wherein recognizing the goods includes recognizing the goods by receiving a user input for the goods from an input unit including at least one of a voice input unit, a touch panel, or keypad when recognition of the goods based on the goods loading/unloading video fails.

11. The method according to claim 10, 11, further comprising:
accumulating and storing the generated video; and
performing background modeling of a video based on the accumulated and stored video to generate the background image.

12. The method according to claim 10, wherein the updating the pre-stored storage items information comprises:
recognizing the loading/unloading of goods through vision recognition from the goods loading/unloading video to generate recognition information;
separating an object region from the goods loading/unloading video based on the generated recognition information;
extracting a characteristic point of corresponding goods from the separated object region based on the stored goods information; and
updating the pre-stored storage items information in the refrigerator (100) based on the recognition information on the loading/unloading of goods, characteristic point information on the extracted characteristic point, and the stored goods information, and managing the updated information.

13. The method according to claim 10, 11, further comprising providing information on the storage items and numbers stored in the refrigerator (100), and notification information to a device outside the refrigerator, a portable device, or e-mail to allow a user to check corruption of goods stored for a certain period.

14. The method according to claim 10, 11, further comprising displaying user's usage statistics for each storage item and position information on goods in the refrigerator (100), for a user.

## Patentansprüche

1. Kühlschrank (100), der aufweist:
eine Abbildungseinheit (140), die ein Warenbefüll-/Entnahmevideo durch eine Videoaufzeichnung von Lagerwaren, die in den Kühlschrank (100) gefüllt oder aus ihm entnommen werden erzeugt, wenn eine Tür des Kühlschranks sich öffnet;
eine Datenspeichereinheit (130), die das Warenbefüll-/Entnahmevideo, Wareninformationen, die in dem Kühlschrank (100) gespeichert werden können, und Lagerartikelinformationen speichert;
eine Steuereinheit (160), die ein Hintergrundbild aus dem Warenbefüll-/Entnahmevideo gewinnt und speichert, die das Befüllen/Entnehmen von Waren erkennt basierend auf einem optischen Fluss, der durch Bilderkennung aus dem Warenbefüll-/Entnahmevideo erfasst wird, wobei sie die Waren in dem Warenbefüll-/Entnahmevideo basierend auf dem Warenbefüll-/Entnahmevideo und dem Hintergrundbild erkennt, um Waren und Armbereiche eines Benutzers zu trennen, wenn das Befüllen/Entnehmen von Waren erkannt wird, und die Lagerartikelinformationen in dem Kühlschrank (100) basierend auf dem Erkennungsergebnis der Waren und Wareninformationen, die in der Datenspeichereinheit (130) gespeichert sind, aktualisiert; und
eine Anzeigeeinheit (120), die einen verwalteten Zustand der Lagerartikel für einen Benutzer basierend auf den aktualisierten Lagerartikelinformationen anzeigt,
wobei die Steuereinheit (160) das Befüllen/Entnehmen von Waren basierend auf Richtungen von Bewegungsvektoren erkennt, die durch den optischen Fluss erfasst werden, die entgegengesetzt sind, wenn der Arm des Benutzers in den Kühlschrank eintritt und ihn verlässt, und
wobei die Steuereinheit (160), wenn das Erkennungsergebnis der Waren negativ ist, eine Benutzereingabe für die Waren von einer Eingabeeinheit empfängt, die eine Spracheingabeeinheit und/oder ein Berührungsfeld und/oder eine Tastatur umfasst.

2. Kühlschrank nach Anspruch 1, wobei die Spracheingabeeinheit (150) Sprachinformationen erhält, die fähig sind, nach dem Befüllen und Entnehmen von Waren erzeugt zu werden, und Sprachinformationen, die von einem Benutzer für die Verwaltung von Waren erzeugt werden.

3. Kühlschrank nach Anspruch 1, wobei die Steuereinheit (160) aufweist:
eine Befüll-/Entnahmeerkennungseinheit (161), die den optischen Fluss durch Bilderkennung aus dem von der Abbildungseinheit (140) erzeugten Warenbefüll-/Entnahmevideo erfasst und das Befüllen/Entnehmen von Waren durch den erfassten optischen Fluss erkennt;
eine Objektbereichserfassungseinheit (162), die einen Objektbereich aus dem Warenbefüll-/Entnahmevideo erfasst;
eine Charakteristik-Extraktionseinheit (163), die einen charakteristischen Punkt eines entsprechenden Objekts aus dem erfassten Objektbereich extrahiert; und
eine Lagerartikel-Verwaltungseinheit (164), welche die Lagerartikelinformationen auf dem Kühlschrank (100) basierend auf Erkennungsinformationen über das Befüllen/Entnehmen von Waren, charakteristischen Punktinformationen über den extrahierten charakteristischen Punkt und den gespeicherten Wareninformationen aktualisiert und die aktualisierten Lagerartikelinformationen verwaltet.

4. Kühlschrank nach Anspruch 3, wobei die Befüll-/Entnahmeerkennungseinheit (161) den optischen Fluss durch Abtasten der Richtung eines Bildpunkts, der sich in dem Warenbefüll-/Entnahmevideo bewegt, erfasst.

5. Kühlschrank nach Anspruch 1, wobei die Steuereinheit (160) die Richtung des Bewegungsvektors und einen Betrag des Bewegungsvektors relativ zu einem gesamten Bildschirm simuliert, einen kritischen Wert basierend auf einem Ergebnis der Simulation festlegt und das Befüllen/Entnehmen der Waren basierend auf dem festgelegten kritischen Wert erkennt.

6. Kühlschrank nach Anspruch 3, wobei die Objektbereichserfassungseinheit (162) das Warenbefüll-/Entnahmevideo aufnimmt, wenn das Befüllen/Entnehmen von Waren erkannt wird, und eine Differenz zwischen einem erfassten Einzelbild und dem gespeicherten Hintergrundbild berechnet, um den Arm des Benutzers und einen Bereich, den ein Objekt belegt, getrennt zu erfassen.

7. Kühlschrank nach Anspruch 6, wobei die Objektbereichserfassungseinheit (162) unter Verwendung eines Gauß-Modells jedes Einzelbild eines Bilds, das durch die Abbildungseinheit (140) gewonnen wird, akkumuliert, um ein durchschnittliches Hintergrundbild zu gewinnen, um das Hintergrundbild zu erzeugen.

8. Kühlschrank nach Anspruch 6, wobei
die Objektbereichserfassungseinheit (162) einen Bereich, den der Arm des Benutzers und das Objekt belegen, erfasst, eine Position des Arms des Benutzers unter Verwendung eines Kantenbilds findet und den Bereich, den das Objekt belegt, basierend auf der Position des Arms des Benutzers trennt.

9. Kühlschrank nach Anspruch 3, wobei die Charakteristik-Extraktionseinheit (163) eine Charakteristik von Waren aus einem Bereich extrahiert, der von dem Bild, das von dem Warenbefüll-/Entnahmevideo erfasst wird, getrennt ist, und basierend auf der extrahierten Charakteristik von Waren die Warenerkennung durch eine Suche aus einer lokalen DB, die in dem Kühlschrank (100) gespeichert ist, oder einer globalen DB, die außerhalb des Kühlschranks bereitgestellt ist, durchführt.

10. Verfahren zur Verwaltung von Lagerartikeln in einem Kühlschrank (100) unter Verwendung von Bilderkennung, wobei das Verfahren aufweist:
Erzeugen eines Warenbefüll-/Entnahmevideos durch eine Videoaufzeichnung, von Lagerwaren, die in den Kühlschrank (100) gefüllt oder aus ihm entnommen werden, wenn eine Tür des Kühlschranks sich öffnet,
Gewinnen und Speichern eines Hintergrundbilds aus dem Warenbefüll-/Entnahmevideo,
Erkennen des Befüllens/Entladens von Waren durch Bilderkennung aus dem Warenbefüll-/Entnahmevideo basierend auf erfassten Bewegungsvektoren aus dem Warenbefüll-/Entnahmevideo, die entgegengesetzt sind, wenn der Arm eines Benutzers in den Kühlschrank eintritt und ihn verlässt;
Erkennen der Waren in dem Warenbefüll-/Entnahmevideo basierend auf dem Warenbefüll-/Entnahmevideo und dem Hintergrundbild, um Bereiche der Waren und des Arms eines Benutzers zu trennen, wenn das Befüllen/Entnehmen von Waren erkannt wird;
Aktualisieren vorgespeicherter Lagerartikelinformationen in dem Kühlschrank (100) basierend auf dem Erkennungsergebnis von Waren und vorgespeicherten Wareninformationen; und
Anzeigen eines Verwaltungszustands von Lagerartikeln für den Benutzer basierend auf den aktualisierten Lagerartikelinformationen,
wobei das Erkennen der Waren das Erkennen der Waren durch Empfangen einer Benutzereingabe für die Waren von einer Eingabeeinheit umfasst, die eine Spracheingabeeinheit und/oder ein Berührungsfeld und/oder eine Tastatur umfasst, wenn das Erkennen der Waren basierend auf dem Warenbefüll-/Entnahmevideo fehlschlägt.

11. Verfahren nach Anspruch 10, das ferner aufweist:
Akkumulieren und Speichern des erzeugten Videos; und
Durchführen einer Hintergrundmodellierung eines Videos basierend auf dem akkumulierten und gespeicherten Video, um das Hintergrundbild zu erzeugen.

12. Verfahren nach Anspruch 10, wobei das Aktualisieren der vorgespeicherten Lagerartikelinformationen aufweist:
Erkennen des Befüllens/Entnehmens von Waren durch Bilderkennung aus dem Warenbefüll-/Entnahmevideo, um Erkennungsinformationen zu erzeugen;
Separieren eines Objektbereichs von dem Warenbefüll-/Entnahmevideo basierend auf den erzeugten Erkennungsinformationen;
Extrahieren eines charakteristischen Punkts entsprechender Waren aus dem separierten Objektbereich basierend auf den gespeicherten Wareninformationen; und
Aktualisieren der vorgespeicherten Lagerartikelinformationen in dem Kühlschrank (100) basierend auf den Erkennungsinformationen über das Befüllen/Entnehmen von Waren, charakteristischen Punktinformationen über den extrahierten charakteristischen Punkt und den gespeicherten Wareninformationen und Verwalten der aktualisierten Informationen.

13. Verfahren nach Anspruch 10, das ferner die Bereitstellung von Informationen über die Lagerartikel und Anzahlen in dem Kühlschrank (100) und Benachrichtigungsinformationen an eine Vorrichtung außerhalb des Kühlschranks, eine tragbare Vorrichtung oder eine Email aufweist, um es einem Benutzer zu ermöglichen, das Verderben von Waren, die für eine gewisse Zeitspanne gelagert werden, zu prüfen.

14. Verfahren nach Anspruch 10, das ferner das Anzeigen der Nutzungsstatistik eines Benutzers für jeden Lagerartikel und von Positionsinformationen über Waren in dem Kühlschrank (100) für einen Benutzer aufweist.

## Revendications

1. Réfrigérateur (100), comprenant :
une unité d'imagerie (140) générant une vidéo de chargement/déchargement de produits par l'intermédiaire d'un enregistrement vidéo de produits de stockage chargés dans le réfrigérateur (100), ou déchargés à partir de ce dernier, lorsqu'une porte du réfrigérateur s'ouvre ;
une unité de stockage de données (130) stockant la vidéo de chargement/déchargement de produits, des informations de produits qui peuvent être stockées dans le réfrigérateur (100), et des informations d'articles de stockage ;
une unité de commande (160) obtenant et stockant une image d'arrière-plan à partir de la vidéo de chargement/déchargement de produits, reconnaissant le chargement/déchargement de produits sur la base d'un flux optique détecté par l'intermédiaire d'une reconnaissance de vision à partir de la vidéo de chargement/déchargement de produits, reconnaissant les produits dans la vidéo de chargement/déchargement de produits sur la base de la vidéo de chargement/déchargement de produits et l'image d'arrière-plan afin de séparer des produits et des régions de bras de l'utilisateur lorsque le chargement/déchargement de produits est reconnu, et mettant à jour les informations d'articles de stockage dans le réfrigérateur (100) sur la base d'un résultat de reconnaissance des produits et des informations de produits stockées dans l'unité de stockage de données (130) ; et
une unité d'affichage (120) affichant un état géré d'articles de stockage pour un utilisateur sur la base des informations d'articles de stockage mises à jour,
dans lequel l'unité de commande (160) reconnaît le chargement/déchargement de produits sur la base de directions de vecteurs de mouvement détectés par l'intermédiaire du flux optique, qui sont opposés lorsque le bras de l'utilisateur entre dans et puis quitte le réfrigérateur, et
dans lequel, lorsque le résultat de reconnaissance des produits est négatif, l'unité de commande (160) reçoit une entrée utilisateur pour les produits à partir d'une unité d'entrée incluant au moins un parmi une unité d'entrée vocale, un écran tactile, ou un clavier.

2. Réfrigérateur selon la revendication 1, dans lequel l'unité d'entrée vocale (150) obtient des informations vocales capables d'être générées lors du chargement et du déchargement de produits et des informations vocales générées par un utilisateur pour la gestion de produits.

3. Réfrigérateur selon la revendication 1, dans lequel l'unité de commande (160) comprend :
une unité de reconnaissance de chargement/de déchargement (161) détectant le flux optique par l'intermédiaire d'une reconnaissance de vision sur la vidéo de chargement/déchargement de produits générée par l'unité d'imagerie (140), et reconnaissant le chargement/déchargement de produits par l'intermédiaire du flux optique détecté ;
une unité de détection de région d'objet (162) détectant une région d'objet à partir de la vidéo de chargement/déchargement de produits ;
une unité d'extraction de caractéristique (163) extrayant un point caractéristique d'un objet correspondant à partir de la région d'objet détectée ; et
une unité de gestion d'articles de stockage (164) mettant à jour les informations d'articles de stockage sur le réfrigérateur (100) sur la base d'informations de reconnaissance sur le chargement/déchargement de produits, d'informations de point caractéristique sur le point caractéristique extrait, et des informations de produits stockées, et gérant les informations d'articles de stockage mises à jour.

4. Réfrigérateur selon la revendication 3, dans lequel
l'unité de reconnaissance de chargement/de déchargement (161) détecte le flux optique par l'intermédiaire de balayages pour une direction d'un pixel qui se déplace dans la vidéo de chargement/déchargement de produits.

5. Réfrigérateur selon la revendication 1, dans lequel
l'unité de commande (160) simule une direction du vecteur de mouvement et une quantité du vecteur de mouvement relativement à un écran entier, règle une valeur critique sur la base d'un résultat de la simulation, et reconnaît le chargement/déchargement des produits sur la base de la valeur critique réglée.

6. Réfrigérateur selon la revendication 3, dans lequel
l'unité de détection de région d'objet (162) capture la vidéo de chargement/de déchargement de produits lorsque le chargement/déchargement de produits est reconnu, et calcule une différence entre une trame capturée et l'image d'arrière-plan stockée pour séparément détecter le bras de l'utilisateur et une région qu'un objet occupe.

7. Réfrigérateur selon la revendication 6, dans lequel
l'unité de détection de région d'objet (162) accumule, en utilisant un modèle gaussien, chaque trame d'une image obtenue par l'unité d'imagerie (140) pour obtenir une image d'arrière-plan moyenne pour générer l'image d'arrière-plan.

8. Réfrigérateur selon la revendication 6, dans lequel
l'unité de détection de région d'objet (162) détecte une région que le bras de l'utilisateur et l'objet occupent, trouve une position du bras de l'utilisateur en utilisant une image de bord, et sépare la région que l'objet occupe sur la base de la position du bras de l'utilisateur.

9. Réfrigérateur selon la revendication 3, dans lequel
l'unité d'extraction de caractéristique (163) extrait une caractéristique de produits à partir d'une région séparée de l'image capturée à partir de la vidéo de chargement/déchargement de produits, et réalise une reconnaissance de produits par l'intermédiaire d'une recherche dans une base de données locale stockée dans le réfrigérateur (100) ou une base de données générale fournie de l'extérieur du réfrigérateur sur la base de la caractéristique extraite de produits.

10. Procédé de gestion d'articles de stockage dans un réfrigérateur (100) en utilisant une reconnaissance d'image, le procédé comprenant :
la génération d'une vidéo de chargement/déchargement de produits par l'intermédiaire d'un enregistrement vidéo d'articles de stockage chargés dans le réfrigérateur (100), ou déchargés de ce dernier, lorsqu'une porte du réfrigérateur s'ouvre ;
l'obtention et le stockage d'une image d'arrière-plan à partir de la vidéo de chargement/déchargement de produits,
la reconnaissance du chargement/déchargement de produits par l'intermédiaire d'une reconnaissance de vision à partir de la vidéo de chargement/déchargement de produits sur la base de vecteurs de mouvement détectés à partir de la vidéo de chargement/déchargement de produits, qui sont opposés lorsque le bras d'un utilisateur entre dans et puis quitte le réfrigérateur ;
la reconnaissance des produits dans la vidéo de chargement/déchargement de produits sur la base de la vidéo de chargement/déchargement de produits et de l'image d'arrière-plan afin de séparer des produits et des régions de bras de l'utilisateur lorsque le chargement/déchargement de produits est reconnu ;
la mise à jour d'informations d'articles de stockage pré-stockées dans le réfrigérateur (100) sur la base d'un résultat de reconnaissance de produits et d'informations de produits pré-stockées ; et
l'affichage d'un état géré d'articles de stockage pour l'utilisateur sur la base des informations d'articles de stockage mises à jour,
dans lequel la reconnaissance des produits inclut la reconnaissance des produits en recevant une entrée utilisateur pour les produits à partir d'une unité d'entrée incluant au moins un parmi une unité d'entrée vocale, un écran tactile, ou un clavier lorsque la reconnaissance des produits sur la base de la vidéo de chargement/déchargement de produits est un échec.

11. Procédé selon la revendication 10, comprenant en outre :
l'accumulation et le stockage de la vidéo générée ; et
la réalisation d'une modélisation d'arrière-plan d'une vidéo sur la base de la vidéo accumulée et stockée pour générer l'image d'arrière-plan.

12. Procédé selon la revendication 10, dans lequel la mise à jour des informations d'articles de stockage pré-stockées comprend :
la reconnaissance du chargement/déchargement de produits par l'intermédiaire d'une reconnaissance de vision à partir de la vidéo de chargement/déchargement de produits pour générer des informations de reconnaissance ;
la séparation d'une région d'objet à partir de la vidéo de chargement/déchargement de produits sur la base des informations de reconnaissance générées ;
l'extraction d'un point caractéristique de produits correspondants à partir de la région d'objet séparée, sur la base des informations de produits stockées ; et
la mise à jour des informations d'articles de stockage pré-stockées dans le réfrigérateur (100) sur la base des informations de reconnaissance sur le chargement/déchargement de produits, d'informations de point caractéristique sur le point caractéristique extrait, et des informations de produits stockées, et la gestion des informations mises à jour.

13. Procédé selon la revendication 10, comprenant en outre la fourniture d'informations sur les articles de stockage et leur nombre stockés dans le réfrigérateur (100), et d'informations de notification à un dispositif à l'extérieur du réfrigérateur, un dispositif portatif, ou d'un courrier électronique pour permettre à un utilisateur de contrôler la corruption de produits stockés pendant une certaine période.

14. Procédé selon la revendication 10, comprenant en outre l'affichage de statistiques d'usage de l'utilisateur pour chaque article de stockage et d'informations de position sur des produits dans le réfrigérateur (100), pour un utilisateur.
